# FASCICULE DE BREVET EUROPEEN

(11) **EP 2 679 003 B1**
(45) Date de publication et mention de la délivrance du brevet: **15.06.2016**
(21) Numéro de dépôt: 12708887.0
(22) Date de dépôt: 09.02.2012
(51) Int. Cl.: G06F 1/32, H04N 21/4363, H04N 5/765

(54) **PROCEDE ET DISPOSITIF DE GESTION AUTONOME D'UN EQUIPEMENT ELECTRONIQUE**
VERFAHREN UND VORRICHTUNG ZUR ABHÄNGIGER VERWALTUNG EINES ELEKTRONISCHEN GERÄTES
METHOD AND DEVICE FOR AUTONOMOUS STEUERUNG OF AN ELECTRONIC EQUIPMENT

(30) Priorité: 23.02.2011 FR 1151452
(43) Date de publication de la demande: 01.01.2014
(73) Titulaire: Orange, 75015 Paris (FR)
(72) Inventeur: EL CHAMI, Zaher, F-75013 Paris (FR)
(74) Mandataire: Simon, Viviane
(86) Numéro de dépôt international: PCT/FR2012/050280
(87) Numéro de publication internationale: WO 2012/168583

(56) Documents cités:
- US-A1- 2009 160 868
- US-A1- 2009 201 421
- US-A1- 2010 033 026
- US-A1- 2010 053 463
- US-A1- 2010 231 795

## Description

L'invention concerne un procédé et un dispositif de gestion autonome d'un premier équipement électronique. Ledit premier équipement électronique est, en particulier, un premier équipement électronique multimédia connecté par une interface HDMI à un deuxième équipement électronique constitué par un équipement de reproduction.

Le protocole CEC pour Consumer Electronics Control en anglais ou Contrôle des équipements électroniques en français est un protocole permettant à deux équipements électroniques de dialoguer via une interface HDMI. Le protocole CEC permet de créer des enchaînements de commandes automatisées entre plusieurs équipements électroniques connectés entre eux. Ces enchainements de commandes sont effectués via une interface HDMI disponible sur un équipement électronique "principal", sur lequel tous les équipements électroniques sont directement ou indirectement branchés. Ainsi, l'utilisateur de ces équipements bénéficiera d'un contrôle global et d'une simplification du système comportant ces équipements électroniques, en réduisant le nombre de télécommandes utiles.

Ainsi, le protocole CEC permet d'architecturer un système audio/vidéo comportant plusieurs équipements multimédia dont des équipements de reproduction multimédia de manière arborescente :
- la racine étant constituée par un équipement de reproduction multimédia, par exemple, le téléviseur,
- les branches par des équipements multimédias connectés à cet équipements de reproduction tels que switchers, amplis, enregistreurs, etc., et
- les feuilles par des équipements multimédias sources de données multimédias notamment différentes sources audio/vidéo telles que lecteur DVD/HD, console de jeux, terminal numérique, caméscope, etc.

Lorsque l'utilisateur insère un disque dans un lecteur connecté à un équipement de reproduction, et commande la "Lecture" du disque par le lecteur, l'interface HDMI mettant en oeuvre le protocole CEC commande les autres équipements multimédia connectés au lecteur et nécessaires à la reproduction du disque pour l'utilisateur, à savoir :
- commander l'activation du téléviseur (s'il était en veille uniquement) et le basculement du port reproduit sur l'entrée connecté au lecteur,
- éventuellement commander l'activation de l'amplificateur et le basculement du port reproduit sur l'entrée connecté au lecteur.

Lorsque l'utilisateur met en veille sa télévision, il oublie souvent de mettre en veille les différents équipements électroniques connectés à la télévision tels que leur décodeur ou «Set Top Box» (STB). Le protocole CEC permet ainsi, par un enchainement simple de commandes, de déclencher la mise en veille du décodeur ou «Set Top Box».

La demande américaine US 2010/0231795 décrit un dispositif de traitement de signaux d'une interface, notamment une interface HDMI d'un lecteur DVD. Le propos est qu'en fonction du statut de son interface HDMI, le lecteur DVD, déclenche la lecture par la télévision de données EDID. Dans ce cas, le lecteur DVD déclenche une commande de la télévision en fonction de données d'activités de son interface donc de données d'activités du lecteur DVD. Cela n'est possible que si le lecteur DVD et la télévision utilise le même protocole pour dialoguer.

La demande américaine US2013/0033026 décrit un équipement électronique mettant en oeuvre un procédé de contrôle de son état d'alimentation. En particulier, elle propose d'utiliser le protocole CEC pour déclencher la mise en veille, voire l'arrêt d'un lecteur de disque connecté à une télévision lorsque l'utilisateur a commandé l'arrêt de la télévision. La télévision transmet alors l'information d'arrêt de commande utilisateur par le protocole CEC qui déclenche la génération d'un événement d'arrêt du lecteur disque par le microprocesseur du lecteur de disque changeant le statut du lecteur de disque d'abord en état de veille puis après une période déterminée de veille en état d'arrêt.

Le protocole CEC n'étant pas implémenté dans tout les équipements électroniques : Si l'équipement « racine » n'implémente pas le protocole CEC, celui-ci ne peut pas être utilisé et l'utilisateur se retrouve dans une configuration de système composé d'équipements électroniques qu'il doit commander individuellement. Si l'équipement « racine » implémente le protocole CEC mais que le décodeur ou «Set Top Box» ne l'implémente pas, l'utilisateur peut commander de manière grouper la télévision et les équipements « branches » et « feuilles » connectés à cette télévision implémentant le protocole CEC mais de manière individuelle le décodeur ou «Set Top Box».

En outre, aujourd'hui les constructeurs d'équipements électroniques développent des protocoles propriétaires d'enchainement de commandes pour le contrôle de différents équipements électroniques d'un même système électronique, en particulier dans le domaine audiovisuel (AV). Notamment, les protocoles Viera Link de Panasonic, Bravia Theater Sync de Sony, Anynet+ de Samsung, Regza Link de Toshiba ou Aquos Lonk de Sharp sont des protocoles propriétaires compatibles avec la norme HDMI apportant en supplément ces enchainements de commandes. Ainsi, ces protocoles n'étant pas nécessairement compatibles entre elles, et les décodeurs ou «Set Top Box» étant rarement voire suivant les pays jamais fabriqués par le constructeur des télévisions, l'utilisateur doit généralement commander de manière individuelle son décodeur ou «Set Top Box» même lorsque sa télévision implémente un tel protocole propriétaire d'enchainement de commandes.

La demande américaine US2013/0033026 propose d'y remédier pour démarrer le lecteur de disque en proposant que le microprocesseur du lecteur de disque en état d'arrêt transmette à intervalles de temps régulier à la télévision une requête de statut. Ainsi, lorsque l'utilisateur allume sa télévision, la télévision transmet un rapport d'état allumé au lecteur de disque dont le microprocesseur généré une notification d'évènement d'allumage changeant l'état du lecteur de disque de l'état d'arrêt à l'état allumé. Néanmoins, la demande US2013/0033026 indique que pour l'arrêt du lecteur de disque une autre solution est utilisée utilisant le protocole CEC.

Un des buts de la présente invention est de remédier à des inconvénients de l'état de la technique.

Un objet de l'invention est un procédé de gestion autonome d'un premier équipement électronique. Le premier équipement électronique est connecté à au moins un deuxième équipement électronique de telle sorte que ledit premier équipement électronique fournisse au deuxième équipement électronique des données aptes à être utilisés par ledit deuxième équipement électronique. Le procédé de gestion autonome comporte un déclenchement par ledit premier équipement électronique d'une commande d'arrêt d'au moins des moyens fonctionnels dudit premier équipement électronique en fonction de données d'activité d'au moins un deuxième équipement électronique parmi les au moins un deuxième équipement électronique.

Ainsi, le premier équipement électronique ayant la connaissance des activités d'un deuxième équipement électronique peut, éventuellement, arrêter l'activité d'au moins certains de ses moyens fonctionnels en conséquence. Par exemple, si les données d'activités d'un deuxième équipement électronique tel qu'une télévision indique que celui-ci est en mode « veille », le premier équipement électronique tel qu'un décodeur ou «Set Top Box» peut déclencher son propre basculement dans le mode « veille ».En outre, le premier équipement électronique bascule en mode « veille », ou en mode « veille partiel » lorsque l'équipement comporte plusieurs dispositifs pouvant être mis en veille de manière séparée, ou en mode « arrêt ». Ceci permet une économie de l'énergie consommé par le premier équipement électronique, et éventuellement une réduction de l'usure des dispositifs du premier équipement électronique, notamment de sa batterie dans le cas d'équipements électroniques portables tels qu'ordinateur, téléphone sans fil ou mobile, etc.

Avantageusement, le déclenchement est aussi fonction de données d'activité du premier équipement électronique.

Ainsi, si la télévision, deuxième équipement électronique, connectée à une «Set Top Box», premier équipement électronique est en mode « veille » mais que la « Set Top Box » est en cours de mise à jour, il n'y aura pas de déclenchement de commande de la « Set Top Box » mais si la « Set Top Box » est en mode « inactive », le procédé de gestion autonome déclenchera une commande de basculement en mode « veille » de la « Set Top Box ».

Avantageusement, le procédé de gestion autonome comporte une détection d'une activité dudit deuxième équipement électronique par ledit premier équipement électronique.

Ainsi, ladite détection fournie les données d'activité permettant de déclencher ou non une commande dudit premier équipement électronique. Le premier équipement électronique détecte pour cela une activité en fonction notamment des échanges et/ou des données échangées avec le deuxième équipement électronique, par exemple reçus du deuxième équipement électronique. L'avantage d'une telle détection en fonction des échanges et/ou données échangées est qu'elle ne nécessite aucune compatibilité entre le premier équipement électronique et le deuxième équipement électronique pas même dans la demande de données d'activités et la transmission de ces données d'activité.

Avantageusement, le procédé de gestion autonome comporte une détection d'une activité dudit deuxième équipement électronique par ledit premier équipement électronique comportant au moins une demande de statuts du premier équipement électronique au deuxième équipement électronique, ladite demande de statuts étant apte à déclencher une réponse du deuxième équipement électronique au premier équipement électronique comportant des données d'activité du deuxième équipement électronique.

Ainsi, le deuxième équipement électronique indique au premier équipement électronique son activité, sous forme de données d'activité, sur demande permettant au premier équipement électronique de déclencher une commande dudit premier équipement électronique. Le procédé de gestion autonome sera moins complexe s'il demande au deuxième équipement électronique son activité que s'il doit détecter lui-même l'activité du deuxième équipement électronique. En outre, les données d'activités du deuxième équipement électronique seront alors plus fiables.

Avantageusement, le procédé de gestion autonome comporte un renouvellement périodique de ladite détection d'une activité.

Ainsi, le premier équipement électronique peut adapter au mieux son activité dès que le deuxième équipement électronique change d'activité, cela d'autant plus que la période est de renouvellement de la détection d'une activité est définie en fonction du type d'activité détectée.

Avantageusement, la détection d'une activité du deuxième équipement électronique est déclenchée par une détection d'une activité du premier équipement électronique.

Ainsi, lorsque le premier équipement électronique bascule dans un mode d'activité « inactif », le procédé de gestion autonome vérifiera l'activité du deuxième équipement électronique afin de déclencher éventuellement une commande de basculement en mode « veille » du premier équipement électronique si les données d'activité du deuxième équipement électronique sont notamment « veille » ou « inactif ».

Avantageusement, le procédé de gestion autonome comporte une temporisation du déclenchement d'une commande.

Ainsi, si le deuxième équipement électronique est ponctuellement en mode inactif, le procédé de gestion autonome ne déclenchera pas intempestivement une commande de « veille » du premier équipement électronique inappropriée due à l'éloignement ponctuel de l'utilisateur de ce deuxième équipement électronique qu'il souhaite continuer à utiliser avec le premier équipement électronique.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie du premier équipement électronique et étant conçus pour commander l'exécution des différentes étapes de ce procédé.

L'invention vise donc aussi un programme comprenant des instructions de code de programme pour l'exécution des étapes du procédé de gestion autonome lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un autre objet de l'invention est un dispositif de gestion autonome d'un premier équipement électronique. Le premier équipement électronique est connecté à un deuxième équipement électronique de telle sorte que ledit premier équipement électronique fournisse au deuxième équipement électronique des données apte à être utilisés par ledit deuxième équipement électronique. Le dispositif de gestion autonome comporte un déclencheur de moyens de commande d'arrêt d'au moins des moyens fonctionnels dudit premier équipement électronique en fonction de données d'activité du deuxième équipement électronique.

Un objet de l'invention est encore un premier équipement électronique connecté à un deuxième équipement électronique de tel sorte que ledit premier équipement électronique fournisse au deuxième équipement électronique des données apte à être utilisés par ledit deuxième équipement électronique. Le premier équipement électronique comporte un déclencheur de moyens de commande d'arrêt d'au moins des moyens fonctionnels dudit premier équipement électronique en fonction de données d'activité du deuxième équipement électronique.

Avantageusement, le premier équipement électronique consiste en un équipement multimédia et le deuxième équipement électronique un équipement de reproduction.

Avantageusement, le premier équipement électronique est connecté au deuxième équipement électronique par une interface HDMI apte à permettre une détection d'une activité dudit deuxième équipement électronique par ledit premier équipement électronique.

Les caractéristiques et avantages de l'invention apparaîtront plus clairement à la lecture de la description, faite à titre d'exemple, et des figures s'y rapportant qui représentent :
- Figure 1, un schéma simplifié d'un procédé de gestion autonome selon l'invention,
- Figure 2, un schéma simplifié d'échanges au sein du premier équipement électronique lors de la mise en oeuvre d'un procédé de gestion autonome selon l'invention,
- Figure 3, un schéma simplifié d'une architecture comportant un premier équipement électronique selon l'invention.

Par gestion autonome d'un premier équipement électronique est entendue une gestion ne nécessitant pas l'intervention active d'un autre équipement notamment d'un deuxième équipement électronique connecté au premier équipement électronique.

Par premier équipement électronique et deuxième équipement électronique sont entendus tout équipement électronique pouvant être connecté à un ou plusieurs autres équipements électroniques. Le premier équipement électronique est apte à fournir à au moins un deuxième équipement électronique des données aptes à être utilisé par ce deuxième équipement électronique. Le deuxième équipement électronique est donc apte à recevoir des données d'un premier équipement électronique et à utiliser ces données. Dans le domaine de l'audiovisuel, le premier électronique est notamment un décodeur, une « Set Top Box », un lecteur DVD, CD, DVD-Rom, Disque Dur, Blue-Ray, etc., un amplificateur, etc. et le deuxième équipement électronique est notamment un équipement de reproduction multimédia : une télévision, une chaine Hi-fi ; un enregistreur CD, DVD, disque dur ; un amplificateur (si le premier équipement électronique est un décodeur par exemple), etc. Dans le domaine informatique, un modem ou une passerelle domestique peut être un premier équipement électronique et un ordinateur, un Smartphone, une télévision connectée directement à Internet peut être un deuxième équipement électronique.

Par commande d'un premier équipement électronique est entendu un message apte à permettre de contrôler au moins une activité du premier équipement électronique.

Par données d'activités d'un équipement électronique sont entendues des données comportant au moins une information indiquant que l'équipement électronique est « actif » et/ou « inactif » et/ou en mode « veille » et/ou en mode « veille partielle » et/ou en mode « arrêt ». En outre, dans le cas où l'équipement électronique est « actif » ou en mode « veille partielle », les données d'activités peuvent comporte des donnée concernant le type, respectivement d'activité ou de veille partielle.

Par moyens fonctionnels d'un équipement électronique sont entendus tous les moyens dudit équipement permettant de mettre en oeuvre une fonction autre que l'alimentation et le contrôle de l'équipement électronique.

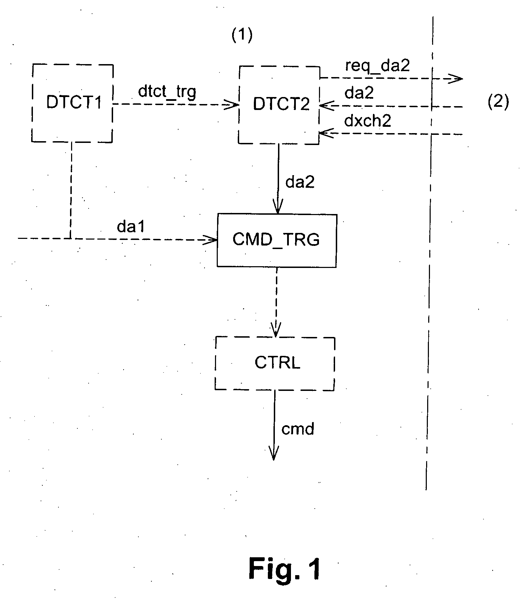

La figure 1 illustre un schéma simplifié d'un procédé de gestion autonome selon l'invention.

Le procédé de gestion autonome permet la gestion d'un premier équipement électronique 1 par lui-même. Le premier équipement électronique 1 est connecté à au moins un deuxième équipement électronique 2 de telle sorte que ledit premier équipement électronique 1 fournisse au deuxième équipement électronique 2 des données du aptes à être utilisés par ledit deuxième équipement électronique 2.

Le procédé de gestion autonome comporte un déclenchement CMD_TRG par ledit premier équipement électronique 1 d'une commande *cmd* dudit premier équipement électronique 1 en fonction de données d'activité *da2* d'au moins un deuxième équipement électronique 2 parmi les au moins un deuxième équipement électronique 2.

En particulier, le procédé de gestion autonome comporte une détection DTCT2 d'une activité dudit deuxième équipement électronique 2 par ledit premier équipement électronique 1. La détection DTCT2 d'une activité dudit deuxième équipement électronique 2 par ledit premier équipement électronique 1 fournit alors les données d'activités *da2* en fonction desquelles une commande cmdest déclenchée CMD_TRG.

Notamment, la détection d'une activité DTCT2 dudit deuxième équipement électronique 2 par ledit premier équipement électronique 1 comporte au moins une demande de statuts *req_da2* du premier équipement électronique 1 au deuxième équipement électronique 2. La demande de statuts *req*_*da2* est apte à déclencher une réponse du deuxième équipement électronique 2 au premier équipement électronique 1 comportant des données d'activité *da2* du deuxième équipement électronique 2.

Une alternative de la détection d'activité comporte l'analyse des échanges et/ou des données échangées *dxch2* entre le premier équipement électronique 1 et le deuxième équipement électronique 2, notamment reçus du deuxième équipement électronique 2 par le premier équipement électronique 1. Par exemple, dans le cas où un décodeur n'échange plus de données avec une télévision, la détection DTCT2 produira des données d'activité de la télévision indiquant « inactif », ou plus précisément « utilisation source décodeur inactive ».

En particulier, la détection d'une activité DTCT2 du deuxième équipement électronique 2 est déclenchée *dtct_trg* par une détection d'une activité du premier équipement électronique 1. Par exemple, une inactivité du premier équipement électronique 1 ou une activité de fourniture de données déclenchera du premier équipement électronique 1 au deuxième équipement électronique 2 la détection d'une activité DTCT2 du deuxième équipement électronique 2 notamment pour vérifier si le deuxième équipement électronique 2 est actif ou non. Un activité de mise à jour du premier équipement électronique quand à elle ne déclenchera par de détection d'une activité DTC2 du deuxième équipement électronique.

En particulier, le déclenchement CMD_TRG est aussi fonction de données d'activité *da1* du premier équipement électronique 1, notamment produites par une détection DTCT1 d'une activité du premier équipement électronique 1.

En particulier, la commande cmd est une commande d'arrêt d'au moins des moyens fonctionnels dudit premier équipement électronique 1.

En particulier, le procédé de gestion autonome comporte un contrôle CTRL du premier équipement électronique 1 qui reçoit une instruction du déclenchement CMD_TRG apte à permettre la mise en oeuvre d'une commande *cmd*.

Dans un mode de réalisation particulier, le procédé de gestion autonome est mis en oeuvre par un programme comprenant des instructions de code de programme pour l'exécution des étapes du procédé de gestion autonome lorsque ledit programme est exécuté par un processeur.

L'invention vise aussi un support d'information. Le support d'informations peut être n'importe quelle entité ou dispositif capable de stocker le programme de gestion autonome. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

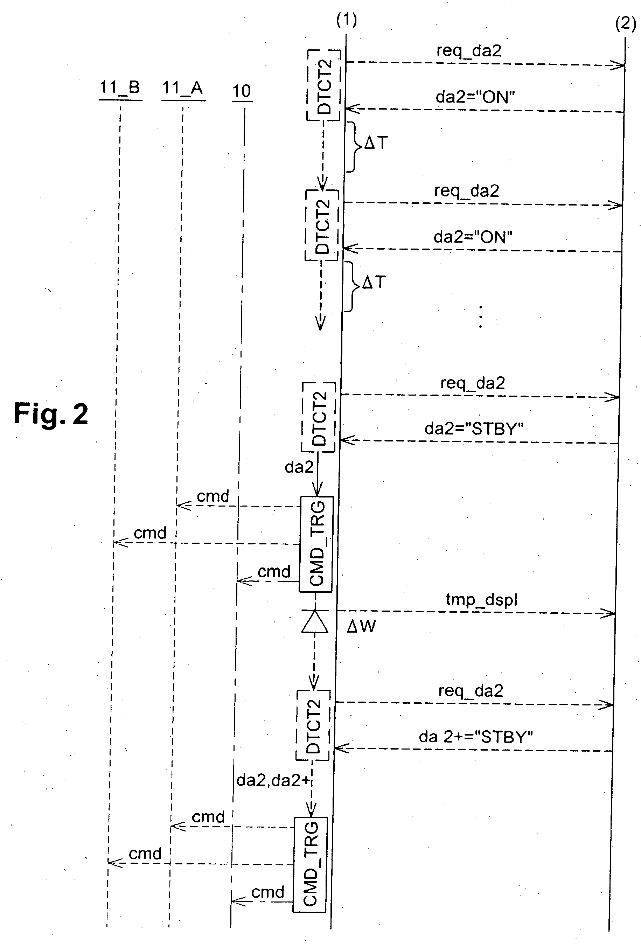

La figure 2 illustre un schéma simplifié d'échanges au sein du premier équipement électronique 1 lors de la mise en oeuvre d'un procédé de gestion autonome selon l'invention.

Un premier équipement électronique 1 comporte plusieurs moyens : des moyens fonctionnels 11_A, éventuellement 11_B, et éventuellement des moyens d'alimentation 10, notamment une batterie où un raccordement à une alimentation extérieure telle qu'une alimentation secteur.

Le procédé de gestion autonome comporte au moins un déclenchement CMD_TRG par le premier équipement électronique 1 d'une commande dudit premier équipement électronique 1, notamment d'au moins des moyens fonctionnels 11_A dudit premier équipement électronique 1 en fonction de données d'activité *da2* d'un deuxième équipement électronique 2 connecté au premier équipement électronique 1.

En particulier, le procédé de gestion autonome comporte une détection d'une activité DTCT2 du deuxième équipement électronique 2 apte à permettre de fournir les données d'activité *da2* au déclenchement CMD_TRG.

Notamment, la détection d'une activité DTCT2 dudit deuxième équipement électronique 2 par ledit premier équipement électronique 1 comporte au moins une demande de statuts *req_da2* du premier équipement électronique 1 au deuxième équipement électronique 2. La demande de statuts *req_da2* est apte à déclencher une réponse du deuxième équipement électronique 2 au premier équipement électronique 1 comportant des données d'activité *da2* du deuxième équipement électronique 2. Par exemple, le deuxième équipement électronique 2 indiquera au premier équipement électronique 1 qu'il est allumé en renvoyant la donnée d'activité *da2* = « ON » ou qu'il est en veuille en renvoyant la donnée d'activité *da2* = « STBY ».

En particulier, le procédé de gestion autonome comporte un renouvellement périodique de ladite détection d'une activité DTCT2 du deuxième équipement électronique 2. La détection DTCT2 est alors renouvelée à la fin de chaque période de durée Δt. La période Δt est notamment prédéfinie, par exemple en fonction d'un type d'activité à détecter et/ou de manière optimale pour ne pas surcharger l'interface entre le premier équipement électronique 1 et le deuxième équipement électronique 2, et/ou le deuxième équipement électronique 2 et/ou le premier équipement électronique 1.

Dans l'exemple illustré par la figure 2, la détection DTCT2 fournissant une donnée d'activité *da2* = « ON » est renouvelée par exemple toutes les minutes.

Lorsque la détection DTCT2 fournit une donnée d'activité *da2* = « STBY » cela peut éventuellement déclencher immédiatement une commande CMD_TRG des moyens fonctionnels 11_A et éventuellement 11_B, pour une mise en veille et éventuellement des moyens d'alimentation 10 pour une mise en arrêt complet du premier équipement électronique 11.

De manière alternative, lorsque la détection DTCT2 fournit une donnée d'activité *da2* = « STBY » cela peut éventuellement déclencher directement une commande de temporisation. La temporisation permet de retarder d'une période ΔW le déclenchement CMD_TRG d'une commande CMD_TRG des moyens fonctionnels 11_A et éventuellement 11_B, pour une mise en veille et éventuellement des moyens d'alimentation 10 pour une mise en arrêt complet du premier équipement électronique 11. En particulier, la temporisation peut comporter l'envoi par le premier équipement électronique 1 de données reproductibles par le deuxième équipement électronique 2 comportant un message d'information sur la temporisation tmp_dspl, par exemple la « Set Top Box » 1 envoie des données multimédia à une télévision 2 telles que la reproduction des données multimédia permettent l'affichage sur un écran de la télévision 2 d'un message à destination de l'utilisateur de la télévision que la « Set Top Box » va se mettre en veille dans un laps de temps ΔW (ce message peut prévoir de la période de temporisation.

En particulier, à la fin de la temporisation, le procédé peut en outre comporter une dernière détection d'une activité DTCT2 du deuxième équipement électronique 2 afin de vérifier si les données d'activité actuelles *da2*+ sont identiques à celles *da2* ayant déclenché la commande temporisée.

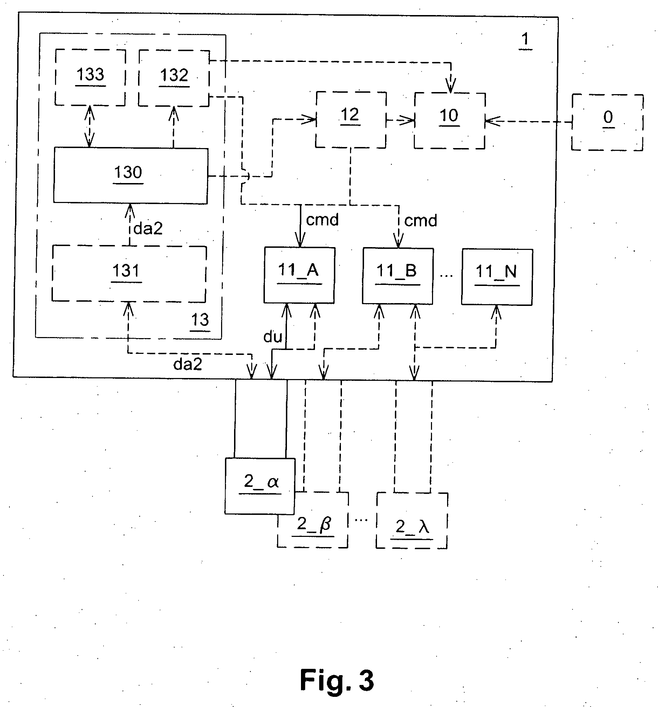

La figure 3 illustre un schéma simplifié d'une architecture comportant un premier équipement électronique 1 selon l'invention. Le premier équipement électronique 1 est connecté à un deuxième équipement électronique 2 de telle sorte que ledit premier équipement électronique 1 fournisse au deuxième équipement électronique 2 des données *du* apte à être utilisés par ledit deuxième équipement électronique 2

La figue 3 montre un premier équipement électronique 1 comportant notamment un dispositif de gestion autonome 13 selon l'invention. Le dispositif de gestion autonome 13 comporte un déclencheur 130 de moyens de commande 132, 12 dudit premier, équipement électronique 1 en fonction de données d'activité *da2* du deuxième équipement électronique 2.

En particulier, le dispositif de gestion autonome 13 comporte un détecteur d'activité 131 d'au moins un deuxième équipement électronique 2_α, 2_β, ..., 2_λ,. Le détecteur d'activité 131 fournit au déclencheur 130 des données d'une activité *da2* dudit deuxième équipement électronique 2_α.

En particulier, le dispositif de gestion autonome 13 comporte un temporisateur 133 apte à temporiser le déclencheur de commande 130. Le temporisateur 133 peut éventuellement être intégré au déclencheur de commande 130. Ainsi, notamment, le détecteur 131 envoie des données d'activités *da2* au déclencheur 130 qui détermine ces données d'activités *da2* sont aptes à déclencher une commande grâce au déclencheur 130. Le déclencheur 130 envoie ses instructions au temporisateur 133 qui soit les transmet directement à un contrôleur pour exécution, soit les renvoient au déclencheur 130 pour confirmation avant transmission à un contrôleur pour exécution.

En particulier, le dispositif de gestion autonome comporte un contrôleur 132 apte à commander en fonction d'une instruction du déclencheur 130 au moins un des moyens fonctionnels 11_A, 11_B, ..., 11_N du premier équipement électronique 1, et éventuellement des moyens d'alimentation 10. De manière alternative, le premier équipement électronique 1 comporte un contrôleur 132 apte à commander au moins un des moyens fonctionnels 11_A, 11_B, ..., 11_N du premier équipement électronique 1, et éventuellement des moyens d'alimentation 10 en fonction d'une commande d'une interface utilisateur (non illustrée) du premier équipement électronique 1 ou d'une instruction du déclencheur 130.

La figue 3 montre un premier équipement électronique 1 comportant un déclencheur 130 de moyens de commande 132, 12 dudit premier équipement électronique 1 en fonction de données d'activité *da2* du deuxième équipement électronique 2.

En particulier, le premier équipement électronique 1 comporte un détecteur d'activité 131 d'au moins un deuxième équipement électronique 2_α, 2_β, ..., 2_λ,. Le détecteur d'activité 131 fournit au déclencheur 130 des données d'une activité *da2* dudit deuxième équipement électronique 2_α.

En particulier, le premier équipement électronique 1 comporte un temporisateur 133 apte à temporiser le déclencheur de commande 130.

En particulier, le premier équipement électronique 1 comporte un contrôleur 132 apte à commander au moins un des moyens fonctionnels 11_A, 11_B, ..., 11_N du premier équipement électronique 1, et éventuellement des moyens d'alimentation 10 en fonction d'une commande d'une interface utilisateur (non illustrée) du premier équipement électronique 1 ou d'une instruction du déclencheur 130.

En particulier, le premier équipement électronique 1 consiste en un équipement multimédia et le deuxième équipement électronique 2 un équipement de reproduction.

En particulier, le premier équipement électronique 1 est connecté au deuxième équipement électronique 2 par une interface HDMI (non illustrée) apte à permettre une détection DTCT2 d'une activité dudit deuxième équipement électronique 2 par ledit premier équipement électronique 1, par exemple une donnée d'activité « Power Status » permettant au premier équipement électronique 1 de détecter du deuxième équipement électronique 2 alimenté et la mise en veille du deuxième équipement électronique 2.

Ainsi, une utilisation de l'invention permet la mise en veille ou l'arrêt autonome de décodeur, modem, passerelle, «Set Top Box », amplificateur audio, etc. lorsque la télévision, l'ordinateur, la chaîne Hi-fi, etc. auquel il est connecté est arrêté ou mis en veille automatiquement ou sur demande de l'utilisateur.

Cette utilisation de l'invention permet de réduire la consommation énergétique du premier équipement électronique, mais aussi des serveurs lorsque ces premiers équipements fonctionnent en relation avec des serveurs.

Cette utilisation de l'invention permet en outre de réduire la consommation de bande passante lorsque le premier équipement est connecté à un réseau de communication.

## Revendications

1. Procédé de gestion autonome d'un premier équipement électronique, ledit premier équipement électronique (1) étant connecté à au moins un deuxième équipement électronique (2) de tel sorte que ledit premier équipement électronique (1) fournisse au deuxième équipement électronique (2) des données apte à être utilisés par ledit deuxième équipement électronique (2), **caractérisé en ce que** ledit procédé de gestion autonome comporte un déclenchement (CMD_TRG) par ledit premier équipement électronique (1) d'une commande d'arrêt d'au moins des moyens fonctionnels dudit premier équipement électronique (1) en fonction de données d'activité (*da2*) d'au moins un deuxième équipement électronique (2) parmi les au moins un deuxième équipement électronique (2).

2. Procédé de gestion autonome selon l'une quelconque des revendications précédentes **caractérisé en ce que** ledit déclenchement (CMD_TRG) est aussi fonction de données d'activité (*da1*) du premier équipement électronique (1).

3. Procédé de gestion autonome selon l'une quelconque des revendications précédentes **caractérisé en ce que** ledit procédé de gestion autonome comporte une détection (DTCT2) d'une activité dudit deuxième équipement électronique (2) par ledit premier équipement électronique (1).

4. Procédé de gestion autonome selon l'une quelconque des revendications précédentes **caractérisé en ce que** ledit procédé de gestion autonome comporte une détection (DTCT2) d'une activité dudit deuxième équipement électronique (2) par ledit premier équipement électronique (1) comportant au moins une demande de statuts (req_da2) du premier équipement électronique (1) au deuxième équipement électronique (2), ladite demande de statuts (*req*_*da2*) étant apte à déclencher une réponse du deuxième équipement électronique (2) au premier équipement électronique (1) comportant des données d'activité (*da2*) du deuxième équipement électronique (2).

5. Procédé de gestion autonome selon l'une quelconque des revendications 3 ou 4 **caractérisé en ce que** ledit procédé de gestion autonome comporte un renouvellement périodique de ladite détection d'une activité (DTCT2).

6. Procédé de gestion autonome selon l'une quelconque des revendications 3 à 5 **caractérisé en ce que** ladite détection d'une activité du deuxième équipement électronique (2) est déclenché par une détection (DTCT1) d'une activité du premier équipement électronique (1).

7. Procédé de gestion autonome selon l'une quelconque des revendications précédentes **caractérisé en ce que** ledit procédé de gestion autonome comporte une temporisation (ΔW) du déclenchement (CMD_TRG) d'une commande.

8. Programme comprenant des instructions de code de programme pour l'exécution des étapes du procédé de gestion autonome selon l'une quelconque des revendications précédentes lorsque ledit programme est exécuté par un processeur.

9. Dispositif de gestion autonome d'un premier équipement électronique, ledit premier équipement électronique (1) étant connecté à un deuxième équipement électronique (2) de tel sorte que ledit premier équipement électronique (1) fournisse au deuxième équipement électronique (2) des données apte à être utilisés par ledit deuxième équipement électronique (2), **caractérisé en ce que** ledit dispositif de gestion autonome comporte un déclencheur (130) de moyens de commande (12, 132) d'arrêt d'au moins des moyens fonctionnels dudit premier équipement électronique (1) en fonction de données d'activité (*da2*) du deuxième équipement électronique (2).

10. Premier équipement électronique connecté à un deuxième équipement électronique (2) de tel sorte que ledit premier équipement électronique (1) fournisse au deuxième équipement électronique (2) des données apte à être utilisés par ledit deuxième équipement électronique (2), **caractérisé en ce que** ledit premier équipement électronique (1) comporte un déclencheur (130) de moyens de commande (12,132) d'arrêt d'au moins des moyens fonctionnels dudit premier équipement électronique (1) en fonction de données d'activité (*da2*) du deuxième équipement électronique (2).

11. Premier équipement électronique (1) selon la revendication précédente **caractérisé en ce que** le premier équipement électronique (1) consiste en un équipement multimédia et le deuxième équipement électronique (2) un équipement de reproduction.

12. Premier équipement électronique (1) selon l'une quelconque des revendications 10 ou 11 **caractérisé en ce que** ledit premier équipement électronique (1) est connecté au deuxième équipement électronique (2) par une interface HDMI apte à permettre une détection (DTCT2) d'une activité dudit deuxième équipement électronique (2) par ledit premier équipement électronique (1).

## Patentansprüche

1. Verfahren zur autonomen Verwaltung einer ersten elektronischen Ausrüstung, wobei die erste elektronische Ausrüstung (1) an mindestens eine zweite elektronische Ausrüstung (2) angeschlossen ist, so dass die erste elektronische Ausrüstung (1) an die zweite elektronische Ausrüstung (2) Daten liefert, die geeignet sind, von der zweiten elektronischen Ausrüstung (2) verwendet zu werden, **dadurch gekennzeichnet, dass** das Verfahren zur autonomen Verwaltung eine Auslösung (CMD_TRG), durch die erste elektronische Ausrüstung (1), eines Befehls zum Anhalten mindestens von Betriebsmitteln der ersten elektronischen Ausrüstung (1) in Abhängigkeit von Aktivitätsdaten (da2) mindestens einer zweiten elektronischen Ausrüstung (2) unter der mindestens einen zweiten elektronischen Ausrüstung (2) umfasst.

2. Verfahren zur autonomen Verwaltung nach einem der vorhergehenden Ansprüche, **dadurch gekennzeichnet, dass** die Auslösung (CMD_TRG) auch von Aktivitätsdaten (da1) der ersten elektronischen Ausrüstung (1) abhängt.

3. Verfahren zur autonomen Verwaltung nach einem der vorhergehenden Ansprüche, **dadurch gekennzeichnet, dass** das Verfahren zur autonomen Verwaltung eine Erfassung (DTCT2) einer Aktivität der zweiten elektronischen Ausrüstung (2) durch die erste elektronische Ausrüstung (1) umfasst.

4. Verfahren zur autonomen Verwaltung nach einem der vorhergehenden Ansprüche, **dadurch gekennzeichnet, dass** das Verfahren zur autonomen Verwaltung eine Erfassung (DTCT2) einer Aktivität der zweiten elektronischen Ausrüstung (2) durch die erste elektronische Ausrüstung (1) umfasst, die mindestens eine Statusanforderung (req_da2) der ersten elektronischen Ausrüstung (1) an die zweite elektronische Ausrüstung (2) umfasst, wobei die Statusanforderung (req_da2) geeignet ist, eine Antwort der zweiten elektronischen Ausrüstung (2) an die erste elektronische Ausrüstung (1), umfassend Aktivitätsdaten (da2) der zweiten elektronischen Ausrüstung (2) auszulösen.

5. Verfahren zur autonomen Verwaltung nach einem der Ansprüche 3 oder 4, **dadurch gekennzeichnet, dass** das Verfahren zur autonomen Verwaltung eine periodische Erneuerung der Erfassung einer Aktivität (DTCT2) umfasst.

6. Verfahren zur autonomen Verwaltung nach einem der Ansprüche 3 bis 5, **dadurch gekennzeichnet, dass** die Erfassung einer Aktivität der zweiten elektronischen Ausrüstung (2) durch eine Erfassung (DTCT1) einer Aktivität der ersten elektronischen Ausrüstung (1) ausgelöst wird.

7. Verfahren zur autonomen Verwaltung nach einem der vorhergehenden Ansprüche, **dadurch gekennzeichnet, dass** das Verfahren zur autonomen Verwaltung eine Verzögerung (ΔW) der Auslösung (CMD_TRG) eines Befehls umfasst.

8. Programm, umfassend Programmcodebefehle für die Ausführung der Schritte des Verfahrens zur autonomen Verwaltung nach einem der vorhergehenden Ansprüche, wenn das Programm von einem Prozessor ausgeführt wird.

9. Vorrichtung zur autonomen Verwaltung einer ersten elektronischen Ausrüstung, wobei die erste elektronische Ausrüstung (1) an eine zweite elektronische Ausrüstung (2) angeschlossen ist, so dass die erste elektronische Ausrüstung (1) an die zweite elektronische Ausrüstung (2) Daten liefert, die geeignet sind, von der zweiten elektronischen Ausrüstung (2) verwendet zu werden, **dadurch gekennzeichnet, dass** die Vorrichtung zur autonomen Verwaltung einen Auslöser (130) von Mitteln zur Steuerung (12, 132) eines Anhaltens mindestens von Betriebsmitteln der ersten elektronischen Ausrüstung (1) in Abhängigkeit von Aktivitätsdaten (da2) der zweiten elektronischen Ausrüstung (2) umfasst.

10. Erste elektronische Ausrüstung, die an eine zweite elektronische Ausrüstung (2) angeschlossen ist, so dass die erste elektronische Ausrüstung (1) an die zweite elektronische Ausrüstung (2) Daten liefert, die geeignet sind, von der zweiten elektronischen Ausrüstung (2) verwendet zu werden, **dadurch gekennzeichnet, dass** die erste elektronische Ausrüstung (1) einen Auslöser (130) von Mitteln zur Steuerung (12, 132) eines Anhaltens mindestens von Betriebsmitteln der ersten elektronischen Ausrüstung (1) in Abhängigkeit von Aktivitätsdaten (da2) der zweiten elektronischen Ausrüstung (2) umfasst.

11. Erste elektronische Ausrüstung (1) nach dem vorhergehenden Anspruch, **dadurch gekennzeichnet, dass** die erste elektronische Ausrüstung (1) in einer Multimedia-Ausrüstung und die zweite elektronische Ausrüstung (2) in einer Wiedergabeausrüstung besteht.

12. Erste elektronische Ausrüstung (1) nach einem der Ansprüche 10 oder 11, **dadurch gekennzeichnet, dass** die erste elektronische Ausrüstung (1) an die zweite elektronische Ausrüstung (2) durch eine HDMI-Schnittstelle angeschlossen ist, die geeignet ist, eine Erfassung (DTCT2) einer Aktivität der zweiten elektronischen Ausrüstung (2) durch die erste elektronische Ausrüstung (1) zu ermöglichen.

## Claims

1. Method of autonomous management of a first electronic apparatus, said first electronic apparatus (1) being connected to at least one second electronic apparatus (2) in such a way that said first electronic apparatus (1) provides the second electronic apparatus (2) with data able to be used by said second electronic apparatus (2), **characterized in that** said autonomous management method comprises a triggering (CMD_TRG) by said first electronic apparatus (1) of a command for shutting down at least functional means of said first electronic apparatus (1) as a function of activity data (*da2*) of at least one second electronic apparatus (2) from among the at least one second electronic apparatus (2).

2. Autonomous management method according to either one of the preceding claims, **characterized in that** said triggering (CMD_TRG) is also dependent on activity data (*da1*) of the first electronic apparatus (1).

3. Autonomous management method according to either one of the preceding claims, **characterized in that** said autonomous management method comprises a detection (DTCT2) of an activity of said second electronic apparatus (2) by said first electronic apparatus (1).

4. Autonomous management method according to any one of the preceding claims, **characterized in that** said autonomous management method comprises a detection (DTCT2) of an activity of said second electronic apparatus (2) by said first electronic apparatus (1) comprising at least one request for statuses (req_da2) from the first electronic apparatus (1) to the second electronic apparatus (2), said request for statuses *(req_da2)* being able to trigger a response of the second electronic apparatus (2) to the first electronic apparatus (1) comprising activity data (*da2*) of the second electronic apparatus (2).

5. Autonomous management method according to either one of Claims 3 and 4, **characterized in that** said autonomous management method comprises a periodic renewal of said detection of an activity (DTCT2).

6. Autonomous management method according to any one of Claims 3 to 5, **characterized in that** said detection of an activity of the second electronic apparatus (2) is triggered by a detection (DTCT1) of an activity of the first electronic apparatus (1).

7. Autonomous management method according to any one of the preceding claims, **characterized in that** said autonomous management method comprises a time delay (ΔW) of the triggering (CMD_TRG) of a command.

8. Program comprising program code instructions for the execution of the steps of the autonomous management method according to any one of the preceding claims when said program is executed by a processor.

9. Device for autonomous management of a first electronic apparatus, said first electronic apparatus (1) being connected to a second electronic apparatus (2) in such a way that said first electronic apparatus (1) provides the second electronic apparatus (2) with data able to be used by said second electronic apparatus (2), **characterized in that** said autonomous management device comprises a trigger (130) of command means (12, 132) for shutting down at least functional means of said first electronic apparatus (1) as a function of activity data (*da2*) of the second electronic apparatus (2).

10. First electronic apparatus connected to a second electronic apparatus (2) in such a way that said first electronic apparatus (1) provides the second electronic apparatus (2) with data able to be used by said second electronic apparatus (2), **characterized in that** said first electronic apparatus (1) comprises a trigger (130) of command means (12, 132) for shutting down at least functional means of said first electronic apparatus (1) as a function of activity data (*da2*) of the second electronic apparatus (2).

11. First electronic apparatus (1) according to the preceding claim, **characterized in that** the first electronic apparatus (1) consists of a multimedia apparatus and the second electronic apparatus (2) a reproduction apparatus.

12. First electronic apparatus (1) according to either one of Claims 10 and 11, **characterized in that** said first electronic apparatus (1) is connected to the second electronic apparatus (2) by an HDMI interface able to allow a detection (DTCT2) of an activity of said second electronic apparatus (2) by said first electronic apparatus (1).
